(19) Europäisches Patentamt
European Patent Office
Office européen des brevets

(11) **EP 3 353 960 B1**

(12) **EUROPÄISCHE PATENTSCHRIFT**

(45) Veröffentlichungstag und Bekanntmachung des Hinweises auf die Patenterteilung:
**07.08.2019 Patentblatt 2019/32**

(51) Int Cl.:
***H04L 12/40*** *(2006.01)*

(21) Anmeldenummer: **16785112.0**

(22) Anmeldetag: **14.10.2016**

(86) Internationale Anmeldenummer:
**PCT/EP2016/074807**

(87) Internationale Veröffentlichungsnummer:
**WO 2017/092919 (08.06.2017 Gazette 2017/23)**

(54) **KOMMUNIKATIONSNETZWERK, VERFAHREN ZUM BETREIBEN EINES SOLCHEN UND TEILNEHMER IN EINEM KOMMUNIKATIONSNETZWERK**

COMMUNICATIONS NETWORK, METHOD FOR OPERATING SAME, AND PARTICIPANTS IN A COMMUNICATIONS NETWORK

RÉSEAU DE COMMUNICATION, PROCÉDÉ DE FONCTIONNEMENT ASSOCIÉ ET UTILISATEUR DANS UN RÉSEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.10.2015 DE 102015117937**

(43) Veröffentlichungstag der Anmeldung:
**01.08.2018 Patentblatt 2018/31**

(73) Patentinhaber: **Beckhoff Automation GmbH**
**33415 Verl (DE)**

(72) Erfinder:
• **BUNTE, Thorsten**
**33335 Gütersloh (DE)**
• **BÜTTNER, Holger**
**12157 Berlin (DE)**
• **JANSSEN, Dirk**
**33415 Verl (DE)**
• **RETTIG, Thomas**
**33378 Rheda-Wiedenbrück (DE)**
• **BECKHOFF, Hans**
**33415 Verl (DE)**
• **VONNAHME, Erik**
**33154 Salzkotten (DE)**

(74) Vertreter: **Patentanwaltskanzlei WILHELM & BECK**
**Prinzenstraße 13**
**80639 München (DE)**

(56) Entgegenhaltungen:
**EP-A1- 2 400 778          EP-A2- 2 672 359**
**US-A1- 2012 057 479**

**EP 3 353 960 B1**

**Beschreibung**

Die Erfindung betrifft ein Verfahren zum Betreiben eines Kommunikationsnetzwerks, ein Kommunikationsnetzwerk mit einem ersten und einem zweiten Teilnehmer sowie einen Teilnehmer in einem Kommunikationsnetzwerk.

Diese Patentanmeldung beansprucht die Priorität der deutschen Patentanmeldung 10 2015 117 937.7, deren Offenbarungsgehalt hiermit durch Rückbezug aufgenommen wird.

Ein Kommunikationsnetzwerk umfasst mehrere (das heißt mindestens zwei) Teilnehmer, die untereinander über geeignete Nachrichtenkanäle in Verbindung stehen. Die Nachrichtenkanäle können drahtlose wie drahtgebundene Kanäle umfassen. In einem Kommunikationsnetzwerk werden Informationen üblicherweise von einem Teilnehmer an einen anderen Teilnehmer in Form von diskreten Datenpaketen übertragen. Derartige Datenpakete werden nachfolgend als Telegramme bezeichnet.

In der Praxis tritt das Problem auf, dass ein Telegramm nicht korrekt von einem Teilnehmer an den anderen Teilnehmer übermittelt wird. Hierfür gibt es verschiedene mögliche Ursachen. In Betracht kommen Störungen im sendenden Teilnehmer (das Telegramm wird nicht oder nicht korrekt ausgesandt), auf dem Übermittlungsweg (z.B. bei einer kurzzeitigen Störung des Nachrichtenkanals), sowie im empfangenden Teilnehmer (z.B. kurzzeitiger Ausfall einer Empfangsstufe des empfangenden Teilnehmers).

Es ist bekannt, die Zuverlässigkeit der Informationsübertragung im Kommunikationsnetzwerk dadurch zu erhöhen, dass die zu übermittelnde Information mehrmals nacheinander ausgesandt wird.

In einem ersten Verfahren, das zum Beispiel bei klassischen Feldbussystemen wie PROFIBUS oder auch bei PROFINET realisierbar ist, sendet ein erster Teilnehmer (zum Beispiel ein Master-Teilnehmer) ein Telegramm an einen zweiten Teilnehmer (zum Beispiel einen Slave-Teilnehmers) und wartet dann auf eine Antwort. Zum Beispiel kann vorgesehen sein, dass der Slave-Teilnehmer mit einem separaten Telegramm antwortet. Falls der erste Teilnehmer innerhalb einer festgelegten Zeit keine Antwort erhält, sendet er das ursprünglich ausgesandte Telegramm zum wiederholten Mal.

In einem ähnlichen zweiten Verfahren verarbeiten die Teilnehmer das Telegramm im Durchlauf (zum Beispiel bei EtherCAT). In dem Fall kann ein erster Teilnehmer so betrieben werden, dass er ein Telegramm aussendet und dann auf die Rückkehr des ausgesandten Telegramms wartet. Wenn der erste Teilnehmer das erwartete rückkehrende Telegramm nicht empfängt, sendet er das ursprünglich ausgesandte Telegramm zum wiederholten Mal.

Ein Nachteil dieser Verfahren liegt darin, dass der sendende Teilnehmer ereignisgesteuert auf den Empfang eines Telegramms warten muss. Dies kann insbesondere bei Systemen, bei denen Kommunikation und Applikation auf einem gemeinsamen Prozessor laufen, zu einer erhöhten Interruptbelastung führen.

In einem dritten Verfahren sendet ein Teilnehmer anstelle eines einzelnen Telegramms eine Telegrammwiederholungsfolge aus, die mehrere im Wesentlichen inhaltsgleiche Telegramme umfasst. Zur erfolgreichen Übermittlung der Nutzdaten (das heißt der zu übermittelnden Information) genügt es dann, dass der empfangende Teilnehmer wenigstens eines der Telegramme aus der Telegrammwiederholungsfolge empfängt. Ein Teilnehmer kann zum Beispiel so eingerichtet sein, dass er ein erstes erfolgreich empfangenes Telegramm der Telegrammwiederholungsfolge auswertet und alle weiteren eventuell von ihm empfangenen Telegramme der Telegrammwiederholungsfolge ignoriert, das heißt nicht auswertet.

Ist der Teilnehmer dazu eingerichtet, als Reaktion auf den erfolgreichen Empfang des einen Telegramms der Telegrammwiederholungsfolge eine bestimmte Aktion auszulösen, so wird in einer einfachen Ausführungsform der Zeitpunkt der Ausführung der Aktion davon abhängen, auf welches Telegramm der Telegrammwiederholungsfolge der Teilnehmer reagiert. Reagiert der Teilnehmer nicht auf das erste, sondern auf ein späteres Telegramm der Telegrammwiederholungsfolge, so wird er die Aktion später auslösen als bei Reaktion auf das erste Telegramm der Telegrammwiederholungsfolge. Dies kann insbesondere dann problematisch sein, wenn mehrere Teilnehmer in dem Kommunikationsnetzwerk mithilfe von zeitlich aufeinander abgestimmten Telegrammen synchron betrieben werden sollen, wie zum Beispiel in einer automatisierten Fertigungsanlage mit mehreren verteilten Teilnehmern, die bestimmte Aktionen, zum Beispiel das Bewegen eines Bauteils, synchron ausführen müssen.

Die Patentschrift EP 2 527 935 B1 beschreibt ein Verfahren zum Betrieb eines Automatisierungssystems, bei dem auf Senderseite ein Maß für einen Versatz zwischen einem Auftreten eines Synchronsignals und einem Kommunikationstakt ermittelt wird. Das ermittelte Maß für den Versatz wird bei einer Datenübertragung an wenigstens einen Empfänger übermittelt. Der Empfänger wartet nach Empfang des ermittelten Maßes das Verstreichen einer entsprechenden Zeitspanne ab und erzeugt nach Verstreichen der Zeitspanne ein Ausgangssignal in Reaktion auf das Synchronsignal.

Aus der Offenlegungsschrift EP 2 672 359 A2 ist ein Datenübertragungsverfahren in einem Netzwerk mit einer Kette von Knoten bekannt, bei dem die von Knoten auszuführenden Aktionen synchronisiert werden können. Ein Telegramm mit einer auszuführenden Aktion wird dabei vom Master mit einem Zeitwert zum Ausführen einer Aktion durch einen nachgeordneten Knoten versehen und an einen ersten Knoten übertragen, der das Telegramm dann an den nachgeordneten Knoten überträgt, der die Aktion ausführen soll. Um bei der Synchronisierung die Zeit zu berücksichtigen, die im ersten Knoten zwischen dem Erhalt des Telegramms und dessen Weiterleitung verstreicht, wird diese Verzögerungszeit vom im Telegramm angegebenen Zeitwert abgezogen.

Es ist Aufgabe der Erfindung, ein möglichst einfach zu realisierendes und zuverlässiges Verfahren zum Betreiben eines Kommunikationsnetzwerkes anzugeben. Es ist ferner Aufgabe der Erfindung, ein für die Ausführung eines solchen Verfahrens eingerichtetes Kommunikationsnetzwerk und einen entsprechend eingerichteten Teilnehmer anzugeben. Diese Aufgaben werden mit den Merkmalen der unabhängigen Patentansprüche gelöst.

Diese Ausgabe wird von den unabhängigen Ansprüchen gelöst. Bevorzugte Weiterbildungen sind in den abhängigen Ansprüchen angegeben.

Erfindungsgemäß ist vorgesehen, dass ein erster Teilnehmer des Kommunikationsnetzwerks eine Telegrammwiederholungsfolge bestehend aus N aufeinanderfolgenden Telegrammen an einen zweiten Teilnehmer aussendet, wobei $N \geq 2$ ist. N ist die Anzahl der Telegramme der Telegrammwiederholungsfolge. Zu N aufeinanderfolgenden Zeitpunkten $T\_I$ ($I=0, ..., N-1$) beginnt der erste Teilnehmer jeweils mit dem Senden eines der N Telegramme. Jedes der N Telegramme enthält ein Feld, das eine dem jeweiligen Telegramm zugeordnete Wartezeit $W\_I = T\_(N-1) - T\_I + \Delta W\_I$ definiert, wobei $I=0, ..., N-1$ und wobei $\Delta W\_I$ eine nichtnegative Toleranzzeit ist. Jedem Telegramm der Telegrammwiederholungsfolge wird somit eine vom Sendezeitpunkt des betreffenden Telegramms und vom Sendezeitpunkt des letzten Telegramms der Telegrammwiederholungsfolge abhängige Wartezeit zugeordnet, die derart gewählt ist, dass $T\_I + W\_I = T\_(N-1) + \Delta W\_I$ ist. Ausgehend vom Sendezeitpunkt $T\_I$ wird folglich mit Ablauf der Wartezeit $W\_I$ der Sendezeitpunkt $T\_(N-1)$ des spätesten Telegramms der Telegrammwiederholungsfolge plus eine Toleranzzeit zugeordnet. Die Toleranzzeiten $\Delta W\_I$ sollten in allen Telegrammen der TWF jeweils kürzer (am besten deutlich kürzer) als der zeitliche Abstand zwischen dem frühesten und dem spätesten der Sendezeitpunkte sein, das heißt, $\Delta W\_I < T\_(N-1)-T\_0$ ($I=0, ..., N-1$). Vorzugsweise sind die Toleranzzeiten $\Delta W\_I$ in allen Telegrammen der TWF jeweils kürzer als das Minimum der Abstände der Sendezeitpunkte sein, das heißt, $\Delta W\_I < MIN \{T\_J-T\_(J-1); J=1,...,N-1\}$. Erfindungsgemäß ist weiter vorgesehen, dass der zweite Teilnehmer des Kommunikationsnetzwerks unter allen erfolgreich von ihm empfangenen Telegrammen der Telegrammwiederholungsfolge ein Telegramm als ein Nutztelegramm auswählt und eine laufende Zeit ab dem Empfang des Nutztelegramms misst und dann, wenn die laufende Zeit die dem Nutztelegramm zugeordnete Wartezeit erreicht hat, die dem Nutztelegramm zugeordnete Aktion ausführt. Der zweite Teilnehmer zögert damit die Ausführung der dem Nutztelegramm zugeordneten Aktion auf einen Zeitpunkt hinaus, der nicht so sehr davon abhängt, welches Telegramm der Folge als das Nutztelegramm ausgewählt wird (wobei angenommen wird, dass die Laufzeit vom ersten zum zweiten Teilnehmer für alle Telegramme dieselbe ist). Sind die Toleranzzeiten $\Delta W\_I$ für alle Telegramme der TWF identisch (das heißt $\Delta W\_I = \Delta W\_0$ für alle $I=0$ bis $N-1$), so hängt der Zeitpunkt der Einleitung der Aktion nicht von der Wahl des Nutztelegramms ab. Die Toleranzzeit $\Delta W\_I$ ist in manchen Ausführungsformen für jedes der Telegramme ($I=0, ..., N-1$) der Telegrammwiederholungsfolge null. Dies bewirkt eine frühestmögliche Ausführung der Aktion. In anderen Ausführungsformen kann es vorteilhaft sein, wenn die Toleranzzeiten $\Delta W\_I$ positiv, also größer als null sind. Wenn zum Beispiel das früheste Telegramm ($I=0$) der Telegrammwiederholungsfolge als das Nutztelegramm ausgewählt wird, so wird eine positive Toleranzzeit $\Delta W\_0$ in der Regel gewährleisten, dass der zweite Teilnehmer alle späteren Telegramme der Telegrammwiederholungsfolge (insbesondere das letzte) noch vor Ablauf der Wartezeit $W\_0$ empfängt, selbst wenn das erste Telegramm etwas früher oder das letzte Telegramm etwas später als erwartet empfangen werden sollten. Ein Risiko, dass das letzte Telegramm der Telegrammwiederholungsfolge versehentlich als das Nutztelegramm verarbeitet wird, kann damit reduziert werden. Der zweite Teilnehmer kann den Ablauf der Wartezeit zum Beispiel mittels eines getakteten Zählers bestimmen. In einem Beispiel setzt der zweite Teilnehmer bei der Auswahl des Telegramms den getakteten Zähler auf einen Startwert entsprechend der Wartezeit, und der Zähler zählt im Takt bis zu einem Endwert. Das Erreichen des Endwertes markiert dann den Ablauf der Wartezeit.

Gemäß einer Ausführungsform wählt der zweite Teilnehmer unter den von ihm erfolgreich empfangenen Telegrammen der Telegrammwiederholungsfolge das am frühesten von ihm empfangene Telegramm als das Nutztelegramm aus. Der zweite Teilnehmer kann dann alle späteren Telegramme der Telegrammwiederholungsfolge ignorieren. Diese Ausführungsform kann deshalb technisch besonders einfach zu realisieren sein. Grundsätzlich könnte der zweite Teilnehmer aber jedes andere erfolgreich empfangene Telegramm der Telegrammwiederholungsfolge auswählen. Beispielsweise ist es in einer alternativen Ausführungsform denkbar, dass der zweite Teilnehmer bei erfolgreichem Empfang mehrerer Telegramme der Telegrammwiederholungsfolge das späteste der erfolgreich empfangenen Telegramme auswählt. Bei dieser alternativen Ausführungsform würde der zweite Teilnehmer alle früheren erfolgreich empfangenen Telegramme der Telegrammwiederholungsfolge ignorieren und nur das späteste als Nutztelegramm verwenden.

Die einem Telegramm jeweils zugeordnete Aktion kann zum Beispiel in dem Erzeugen eines Interrupts bestehen, mit dem ein empfangender Teilnehmer (z.B. der zweite Teilnehmer) eine Anwendung startet, zum Beispiel zur Steuerung einer angeschlossenen Maschine oder zum Aufnehmen eines Messsignals.

Grundsätzlich können verschiedenen Telegrammen der Telegrammwiederholungsfolge unterschiedliche Aktionen zugeordnet sein. In diesem Fall hängt die vom zweiten Teilnehmer auszuführende Aktion davon ab, welches Telegramm der Wiederholungsfolge vom zweiten Teilnehmer ausgewählt wird. In der Regel wird man aber allen Telegrammen der Telegrammwiederholungsfolge dieselbe Aktion zuordnen, sodass die vom zweiten Teilnehmer auszuführende Aktion unabhängig von der Auswahl des Telegramms aus der Wiederholungsfolge ist.

In einer Ausführungsform wird der zweite Teilnehmer in dem Fall, dass er ein weiteres Telegramm der Telegrammwiederholungsfolge empfängt, die dem weiteren Telegramm zugeordnete Aktion nicht ausführen. Auf die Weise wird sichergestellt, dass der zweite Teilnehmer nur die dem ausgewählten Telegramm zugeordnete Aktion ausführt.

Gemäß einer Ausführungsform leitet der zweite Teilnehmer jedes von ihm empfangene Telegramm der Telegrammwiederholungsfolge an einen weiteren Teilnehmer des Kommunikationsnetzwerks weiter, ohne den Ablauf der im Telegramm angegebenen Wartezeit abzuwarten. Die in den Telegrammen jeweils angegebene Wartezeit hat somit keinen Einfluss auf die Übermittlung der Telegramme innerhalb des Kommunikationsnetzwerkes. Der Vollständigkeit halber sei bemerkt, dass der soeben erwähnte weitere Teilnehmer auch der erste Teilnehmer des Kommunikationsnetzwerks sein kann. In diesem Fall ist unter Weiterleitung des Telegramms das Zurückleiten des Telegramms an den ersten Teilnehmer zu verstehen.

Gemäß einer Ausführungsform schreibt der zweite Teilnehmer Nutzdaten in ein Nutzdatenfeld des empfangenen Telegramms und leitet das so bearbeitete Telegramm an einen weiteren Teilnehmer des Kommunikationsnetzwerks weiter (z.B. an den ersten Teilnehmer zurück oder an einen dritten Teilnehmer weiter), ohne den Ablauf der im Telegramm angegebenen Wartezeit abzuwarten. Insbesondere kann vorgesehen sein, dass der zweite Teilnehmer in jedes Telegramm der Telegrammwiederholungsfolge dieselben Nutzdaten einschreibt. Auf die Weise wird eine redundante Übertragung der vom zweiten Teilnehmer bereitgestellten Nutzdaten an weitere Teilnehmer des Kommunikationsnetzwerks erreicht. Die Telegrammwiederholungsfolge kann somit im Durchlauf durch mehrere in Reihe geschaltete Teilnehmer mit Nutzdaten der Teilnehmer aktualisiert werden. Eine Bearbeitung im Durchlauf ist insbesondere in Ethernet-Feldbussystemen realisierbar (zum Beispiel im EtherCAT-System).

Gemäß einer Ausführungsform enthalten die Telegramme der Telegrammwiederholungsfolge jeweils dieselben Nutzdaten und/oder dieselben Statusdaten. Die Nutzdaten bzw. die Statusdaten werden somit in redundanter Form bereitgestellt. Handelt es sich bei dem Kommunikationsnetzwerk um ein EtherCAT-System, so können unter den Nutzdaten zum Beispiel ein oder mehrere Datagramme zu verstehen sein.

Gemäß einer Ausführungsform werden die Telegramme der Telegrammwiederholungsfolge von den Teilnehmern im Durchlauf verarbeitet. Die Telegramme der Wiederholungsfolge durchlaufen damit eines nach dem anderen die Teilnehmer. Die Anzahl von Taktzyklen, die ein Datenbit benötigt, um einen gegebenen Teilnehmer zu durchlaufen, das heißt die Laufzeit des Bits vom Eingang bis zum Ausgang des Teilnehmers, kann dabei fest eingestellt sein, zum Beispiel auf eine bestimmte Zahl von Taktzyklen. Ein derartiges Verfahren, zum Beispiel EtherCAT, kann insbesondere für Echtzeitanforderungen geeignet sein.

Gemäß einer Ausführungsform sendet der erste Teilnehmer zu einem Zeitpunkt $T\_N$, der später als $T\_(N-1)$ liegt, ein weiteres Telegramm aus, welches nicht der genannten Telegrammwiederholungsfolge angehört, und die Toleranzzeiten $\Delta W\_I$ sind jeweils kürzer als $T\_N - T\_(N-1)$. Auf die Weise kann sichergestellt werden, dass der zweite Teilnehmer die Aktion einleitet, bevor er das weitere Telegramm empfängt. Eine zeitliche Überschneidung des Einleitens der Aktion und des Empfangens des weiteren Telegramms und eine damit verbundene Doppelbeanspruchung des zweiten Teilnehmers kann auf die Weise vermieden werden.

Die obigen Überlegungen gelten entsprechend für jedes Kommunikationsnetzwerk, das zur Ausführung eines Verfahrens gemäß einer der angesprochenen Ausführungsformen eingerichtet ist.

Das Kommunikationsnetzwerk kann insbesondere ein Ethernet-Netzwerk sein, zum Beispiel ein EtherCAT-Netzwerk. Ein Ethernet-Netzwerk ist ein Netzwerk, in dem die Teilnehmer miteinander unter Verwendung eines Ethernet-Protokolls kommunizieren.

Der erfindungsgemäße Teilnehmer in einem Kommunikationsnetzwerk ist dazu eingerichtet, eine Telegrammwiederholungsfolge bestehend aus N Telegrammen zu empfangen und ein erfolgreich von ihm empfangenes Telegramm der Telegrammwiederholungsfolge auszuwählen und eine durch das ausgewählte Telegramm definierte Wartezeit auszuwerten. Der Teilnehmer wird dadurch in die Lage versetzt, eine vom Empfang des Telegramms abhängige

Aktion nicht unmittelbar nach Empfang des Telegramms auszuführen, sondern erst nach Ablauf der Wartezeit, gemessen ab Empfang des ausgewählten Telegramms. Auf die Weise lässt sich eine bessere Synchronisation der von dem Teilnehmer auszuführenden Aktion mit anderen Aktionen innerhalb des Kommunikationsnetzwerks erreichen.

Gemäß einer Ausführungsform weist der Teilnehmer einen Speicher auf und ist dazu eingerichtet, eine Kopie des ausgewählten Telegramms wenigstens bis zum Ablauf der Wartezeit in dem Speicher zu speichern. Der Teilnehmer ist damit wenigstens bis zum Ablauf der Wartezeit imstande, dem Telegramm zusätzliche Informationen zu entnehmen (das heißt Informationen zusätzlich zur Angabe der Wartezeit). Die zusätzlichen Informationen können insbesondere für das Ausführen der Aktion von Nutzen sein. Zum Beispiel kann vorgesehen sein, dass der Teilnehmer die Aktion in Abhängigkeit der zusätzlichen Informationen ausführt.

Gemäß einer Ausführungsform weist der Teilnehmer einen getakteten Zähler auf, dem ein Endwert zugeordnet ist, und der Teilnehmer ist dazu eingerichtet, als Reaktion auf den erfolgreichen Empfang eines Telegramms, sofern der Zähler dann auf seinem Endwert steht: das Telegramm als das Nutztelegramm auszuwählen; einen Startwert entsprechend der durch das Nutztelegramm definierten Wartezeit zu bestimmen, den Zähler auf den Startwert zu setzen, zu starten und bei Erreichen des Endwertes anzuhalten; und die dem Telegramm zugeordnete Aktion erst dann auszuführen, wenn der Abwärtszähler den Endwert erreicht hat. Die Zeitspanne zwischen Starten (das heißt Ingangsetzen) und Anhalten des Zählers wird als das Warteintervall bezeichnet. Die Länge oder Dauer des Warteintervalls ist die Wartezeit. Man erkennt, dass mit dem Warteintervall zwei Effekte verknüpft sind. Der erste Effekt ist darin zu sehen, dass die mit dem empfangenen Telegramm zusammenhängende Aktion erst zum Ende des Warteintervalls ausgeführt wird. Der zweite Effekt besteht darin, dass jedes spätere während des Warteintervalls empfangene Telegramm von dem Teilnehmer in dem Sinne ignoriert wird, dass der Teilnehmer eine dem späteren Telegramm zugeordnete Aktion nicht ausführt. In dieser Ausführungsform wird folglich stets dasjenige Telegramm ausgewählt, welches als erstes erfolgreich empfangen wird, nachdem der Zähler bei seinem Endwert angehalten wurde. Die oben erwähnten Toleranzzeiten $\Delta W\_I$ sollte in dieser Ausführungsform derart kurz sein, dass das Warteintervall zu Ende ist, bevor ein weiteres Telegramm, welches nicht der Telegrammwiederholungsfolge angehört, empfangen wird (zum Beispiel das erste Telegramm einer nächsten Telegrammwiederholungsfolge). Das heißt, die Toleranzzeiten $\Delta W\_I$ (I=0 bis N-1) sollten jeweils kürzer als $T\_N - T\_{(N-1)}$ sein, wobei $T\_N$ der Sendezeitpunkt des weiteren Telegramms ist. Damit wird erreicht, dass der Zähler bei Empfang des ersten Telegramms einer nächsten Telegrammwiederholungsfolge stets auf seinem Endwert steht. Der Zähler steht dann für die nächste vom Teilnehmer empfangene Telegrammwiederholungsfolge neu zur Verfügung, um als Reaktion auf den erfolgreichen Empfang eines Telegramms der Telegrammwiederholungsfolge ein Warteintervall zu definieren. Der Zähler kann zum Beispiel ein getakteter Abwärtszähler sein. Wenn der Teilnehmer erfolgreich ein Telegramm empfängt, während der Abwärtszähler auf null steht, wird der Teilnehmer den Abwärtszähler auf eine durch das Telegramm definierte Wartezeit setzen (das heißt auf einen der Wartezeit entsprechenden Zählerstand), sodass der Abwärtszähler beginnt, ausgehend von diesem Startwert abwärts zu zählen. Sobald der Abwärtszähler den Wert null erreicht hat, hält der Teilnehmer den Abwärtszähler an (so dass der Abwärtszähler auf null stehen bleibt). Der Teilnehmer kann dann eine durch das empfangene Telegramm definierte Aktion einleiten. Fehlt in dem empfangenen Telegramm eine Angabe der Wartezeit, so wird der Teilnehmer dies als Wartezeit null interpretieren und dementsprechend die Aktion ohne Verzögerung einleiten.

In der soeben beschriebenen Ausführungsform ist es vorteilhaft, wenn die Toleranzzeiten $\Delta W\_I$ (I=0 bis N-1) jeweils größer als null sind. Das Warteintervall wird dann etwas länger sein als unbedingt erforderlich. In dem Fall, dass nicht das letzte, sondern ein anderes Telegramm als das Nutztelegramm ausgewählt wurde, wird das Risiko, dass der zweite Teilnehmer das letzte Telegramm ebenfalls als Nutztelegramm behandelt wird, verringert. Die Toleranzzeiten $\Delta W\_I$ betragen vorzugsweise jeweils wenigstens einen Taktzyklus, besser wenigstens zwei Taktzyklen.

Die Erfindung wird nachfolgend unter Bezugnahme auf die beigefügten Zeichnungen weiter erläutert. Gleiche Bezugszeichen in den Zeichnungen bezeichnen gleiche oder äquivalente Elemente.

Fig. 1 zeigt schematisch ein Ausführungsbeispiel eines Kommunikationssystems.

Fig. 2 veranschaulicht den Empfang einer ersten und einer zweiten Telegrammwiederholungsfolge in einem Teilnehmer gemäß einem Ausführungsbeispiel.

Fig. 3 zeigt schematisch ein Ausführungsbeispiel eines Telegramms.

Fig. 4 zeigt schematisch ein Ausführungsbeispiel einer Telegrammwiederholungsfolge.

Fig. 5 veranschaulicht den Empfang einer ersten Telegrammwiederholungsfolge und einer zweiten Telegrammwiederholungsfolge in einem Teilnehmer gemäß einem Ausführungsbeispiel.

Fig. 6 veranschaulicht den Empfang und die Verarbeitung einer Schreib-Telegrammwiederholungsfolge und einer Lese-Telegrammwiederholungsfolge in einem Teilnehmer gemäß einem Ausführungsbeispiel.

Fig. 7 zeigt ein Flussdiagramm eines Verfahrens zum Betreiben eines Kommunikationsnetzwerks gemäß einem Ausführungsbeispiel.

Fig. 8 zeigt schematisch ein Ausführungsbeispiel eines Teilnehmers.

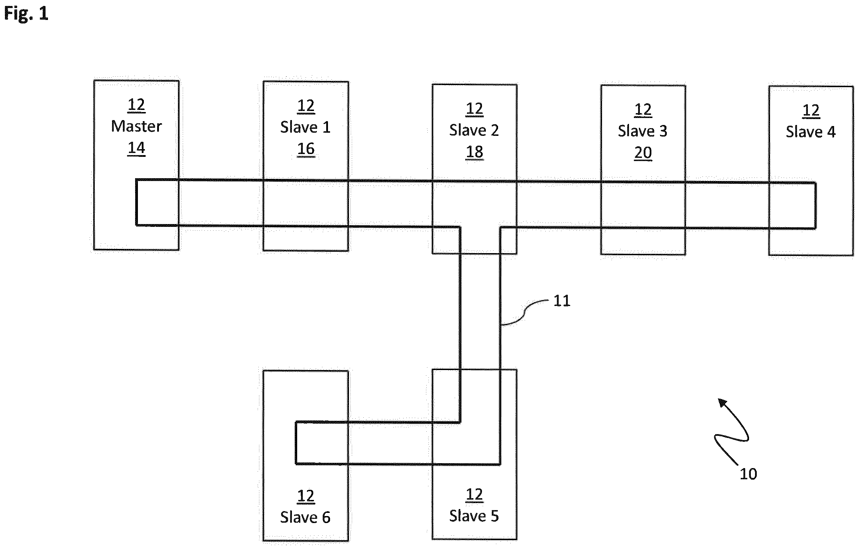

Das in Fig. 1 schematische dargestellte Beispiel eines Kommunikationsnetzwerkes (Netzwerk) 10 umfasst mehrere Teilnehmer 12 einschließlich eines ersten Teilnehmers 14 und eines zweiten Teilnehmers 16. Im Betrieb sendet der erste Teilnehmer 14 eine Telegrammwiederholungsfolge (TWF) bestehend aus N aufeinanderfolgenden Telegram-men aus, wobei $N \geq 2$. Zu N aufeinander folgenden Sendezeitpunkten $T\_I$ (I=0, ..., N-1) beginnt der erste Teilnehmer 14 jeweils mit dem Aussenden eines der N Telegramme. Dem I-ten Telegramm der Telegrammwiederholungsfolge ist in dieser Beschreibung der Index I-1 zugeordnet.

Jedes der N Telegramme enthält ein Feld, das eine dem jeweiligen Telegramm zugeordnete Wartezeit $W_I = T_{(N-1)} - T_I + \Delta W_I$ definiert (wobei I=0, ..., N-1). Darin ist $\Delta W_I$ eine nichtnegative Toleranzzeit. Gemäß einer Ausführungsform ist die Toleranzzeit $\Delta W_I$ für alle Telegramme der Telegrammwiederholungsfolge dieselbe, das heißt, $\Delta W_I = \Delta W_0$ für jedes I von 0 bis N-1. Auf die Weise lässt sich die zeitliche Unbestimmtheit des Zeitpunkts der Einleitung der Aktion minimieren. Gemäß einer anderen Ausführungsform sind die Toleranzzeiten $\Delta W_I$ (I=0, ..., N-1) nicht notwendigerweise für alle Telegramme der Telegrammwiederholungsfolge identisch, aber ihre Differenzen sind geringer als die Differenzen der Sendezeitpunkte $T_I$ (I=0, ..., N-1), das heißt, $|\Delta W_I - \Delta W_J| < T_{(N-1)} - T_0$ für alle I und J von 0 bis N-1; ist diese Bedingung erfüllt, so wird die zeitliche Unbestimmtheit des Zeitpunkts der Einleitung der Aktion zwar nicht minimiert, aber immer noch geringer sein als in einem Verfahren ohne Angabe von Wartezeiten. Je geringer die Differenzen der Toleranzzeiten $\Delta W_I$ (I=0, ..., N-1), desto genauer vorhersagbar wird der Zeitpunkt der Einleitung der Aktion sein.

Der zweite Teilnehmer 16 wählt unter allen erfolgreich von ihm empfangenen Telegrammen der TWF genau ein Telegramm aus und wertet die im ausgewählten Telegramm angegebene Wartezeit aus. In einer einfach implementierbaren Ausführungsform wählt der zweite Teilnehmer unter den erfolgreich empfangenen Telegrammen der TWF das am frühesten empfangene aus. Empfängt der zweite Teilnehmer 16 zum Beispiel alle N Telegramme der TWF erfolgreich, so wird er gemäß dieser Ausführungsform das erste Telegramm der TWF (also dasjenige mit Index I=0) auswählen. Der Empfang eines Telegramms kann zum Beispiel dann als erfolgreich gelten, wenn der Empfänger (hier der zweite Teilnehmer 16) imstande ist, den Inhalt des ausgesandten Telegramms auf der Grundlage des empfangenen Telegramms zu rekonstruieren. Dafür ist es nicht unbedingt erforderlich, dass das empfangene Telegramm eine exakte Kopie des ausgesandten Telegramms ist. Zum Beispiel kann jedes Telegramm unter Verwendung eines Fehlerkorrekturverfahrens erzeugt werden. In diesem Fall weist der Inhalt des Telegramms einen gewissen Grad an Redundanz auf, der es dem Empfänger ermöglicht, einzelne Bitfehler im Telegramm zu korrigieren. Wenn die Fehlerkorrektur gelingt (oder wenn im empfangenen Telegramm keine Fehler festgestellt wurden), so gilt das Telegramm als erfolgreich empfangen.

In dem gezeigten Beispiel sind die Teilnehmer 12 kommunikationstechnisch in Reihe geschaltet und jedes vom ersten Teilnehmer 14 ausgehende Telegramm durchläuft die weiteren Teilnehmer 12 der Reihe nach. Das heißt, jedes Telegramm wird von einem Teilnehmer zum nächsten weitergeleitet. Die in dieser Anmeldung anhand des Sender-Empfänger-Paares 14, 16 erläuterten Operationen können analog in jedem weiteren Sender-Empfänger-Paar des Netzwerks 10 implementiert sein, zum Beispiel in dem Sender-Empfänger-Paar 16, 18 oder 18, 20.

Das Netzwerk 10 kann ein EtherCAT-Netzwerk sein, wobei der Teilnehmer 14 als Master-Einrichtung (Master) und die restlichen Teilnehmer 12 jeweils als Slave-Teilnehmer (Slave) betrieben werden. Im Betrieb durchläuft jedes vom Master 14 ausgehende Telegramm alle Teilnehmer 12 des Netzwerks 10 (gegebenenfalls mit Ausnahme des Masters 14) jeweils auf einem Hinweg und einem Rückweg. Während das Telegramm den betreffenden Teilnehmer durchläuft, kann der Teilnehmer Daten aus dem Telegramm lesen und/oder Daten in das Telegramm schreiben. In dem Netzwerk ist somit ein in sich geschlossener, die Teilnehmer durchlaufender Datenpfad 11 definiert. Gemäß einer weiteren Ausführungsform (nicht dargestellt) durchläuft der Datenpfad 11 wenigstens einen der Teilnehmer 12 nicht genau zweimal, sondern einmal oder mehr als zweimal. Der Datenpfad 11 kann sowohl drahtgebundene als auch drahtlose Abschnitte umfassen. Das hier gezeigte Kommunikationsnetzwerk 10 ist nur ein Beispiel. Grundsätzlich lässt sich die Erfindung in jedem Kommunikationsnetzwerk mit wenigstens zwei Teilnehmern verwirklichen.

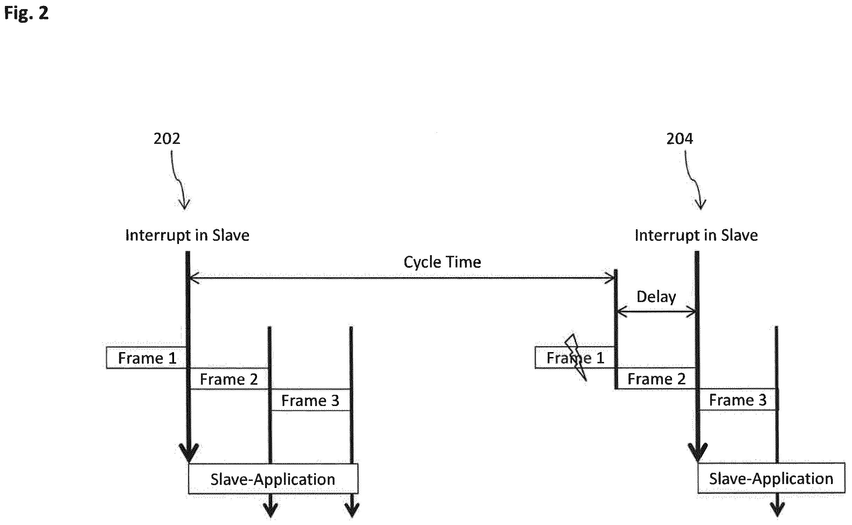

Fig. 2 veranschaulicht ein Beispiel, wo der zweite Teilnehmer 16 eine erste Telegrammwiederholungsfolge S1 und später eine zweite Telegrammwiederholungsfolge S2 empfängt. Die beiden Telegrammwiederholungsfolgen S1 und S2 umfassen jeweils drei Telegramme (das heißt N=3), nämlich Framel, Frame2 und Frame3. Die Telegramme Framel, Frame2 und Frame3 der ersten Folge S1 sind in dem Sinne redundant, dass es genügt, wenn der zweite Teilnehmer 16 wenigstens eines der drei Telegramme der Telegrammwiederholungsfolge S1 erfolgreich empfängt und auswertet. Es ist nicht erforderlich, dass der zweite Teilnehmer 16 mehr als ein Telegramm der Telegrammwiederholungsfolge S1 erfolgreich empfängt. In einer einfachsten Ausführungsform beruht die Redundanz darauf, dass jedes Telegramm der Telegrammwiederholungsfolge S1 dieselben Nutzdaten enthält. In einer anderen Ausführungsform sind die Nutzdaten der einzelnen Telegramme der Telegrammwiederholungsfolge S1 nicht streng identisch, aber doch insofern äquivalent, als es im Ergebnis nicht darauf ankommt, welches Telegramm der Telegrammwiederholungsfolge von dem zweiten Teilnehmer 16 erfolgreich empfangen und ausgewertet wird. Dasselbe gilt entsprechend für die zweite Telegrammwiederholungsfolge S2.

In dem Beispiel empfängt der zweite Teilnehmer 16 erfolgreich das erste (das heißt früheste) Telegramm der Telegrammwiederholungsfolge S1. Als Reaktion auf den erfolgreichen Empfang von Framel leitet der zweite Teilnehmer 16 eine dem Telegramm Framel zugeordnete Aktion ein, ohne eine Wartezeit verstreichen zu lassen. Das heißt, der zweite Teilnehmer 16 führt die Aktion sofort nach der Detektion, dass das Telegramm erfolgreich empfangen wurde, und nicht verzögert aus. Die Aktion kann zum Beispiel das Erzeugen eines Interrupts zum Starten eines bestimmten Programms in dem zweiten Teilnehmer 16 umfassen. Das zweite und das dritte Telegramm (Frame2 und Frame3) der ersten Telegrammwiederholungsfolge S1 werden von dem zweiten Teilnehmer 16 ignoriert, das heißt möglicherweise weitergeleitet (z.B. an den dritten Teilnehmer 18), aber nicht weiter ausgewertet.

Das erste Telegramm Frame1 der zweiten Telegrammwiederholungsfolge S2 wird in dem Beispiel nicht erfolgreich von dem zweiten Teilnehmer empfangen. Dementsprechend wird der zweite Teilnehmer 16 das erste Telegramm Frame1 der zweiten Telegrammwiederholungsfolge S2 zwar (je nach Ausführungsform) an einen weiteren Teilnehmer (z.B. an den dritten Teilnehmer 18) des Kommunikationsnetzwerks weiterleiten, den Inhalt des Telegramms selbst jedoch nicht verwerten. Insbesondere wird der zweite Teilnehmer 16 keine durch Frame1 der Telegrammwiederholungsfolge S2 definierte Aktion ausführen. Das zweite Telegramm Frame2 der Folge S2 wird hingegen in dem Beispiel erfolgreich von dem zweiten Teilnehmer 16 empfangen. Als Reaktion auf den erfolgreichen Empfang von Frame2 aus S2 leitet der zweite Teilnehmer 16 unverzüglich eine durch Frame2 definierte Aktion ein, die zum Beispiel das Erzeugen eines Interrupts umfassen kann. Das dritte Telegramm Frame3 aus S2 wird hingegen vom zweiten Teilnehmer ignoriert werden. Jede Telegrammwiederholungsfolge, die der zweite Teilnehmer 16 empfängt, kann somit eine Aktion seitens des zweiten Teilnehmers 16 auslösen, sofern wenigstens ein Telegramm der betreffenden Telegrammwiederholungsfolge erfolgreich empfangen wird. Jeder Telegrammwiederholungsfolge kann somit eine Aktion zugeordnet sein. In dem Beispiel wird die Aktion jeweils durch das erste erfolgreich empfangene Telegramm der betreffenden Telegrammwiederholungsfolge ausgelöst und ausgeführt, ohne eine Wartezeit verstreichen zu lassen. Der Zeitpunkt der Ausführung der Aktion hängt somit davon ab, welches der N Telegramme der Folge erfolgreich empfangen wird, und ist damit nicht genau vorhersagbar. Dies kann die Synchronisierung von Aktionen der Teilnehmer des Kommunikationsnetzwerks beeinträchtigen. Diese Erkenntnisse liegen der nachfolgend genauer beschriebenen Erfindung zugrunde.

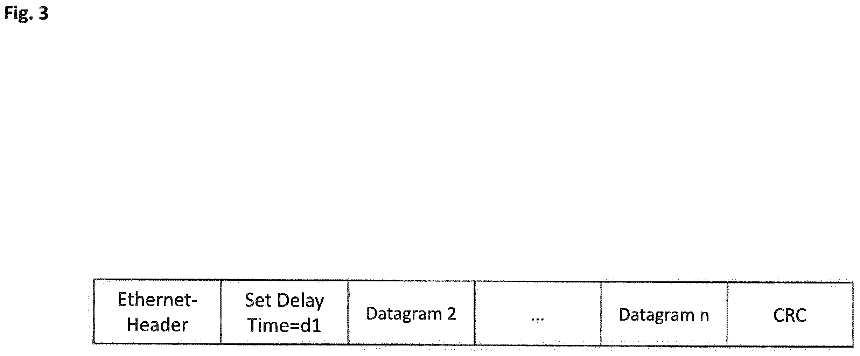

Fig. 3 zeigt schematisch ein Beispiel eines Telegramms, welches die Angabe einer Wartezeit beinhaltet. Das Telegramm ist in dem Beispiel ein EtherCAT-Telegramm, welches wenigstens einen Ethernet-Header, ein oder mehrere Datagramme und einen Prüfwert CRC umfasst. Jedes Datagramm kann ein an einen bestimmten Teilnehmer des Kommunikationsnetzwerks adressierter Abschnitt des Telegramms sein. Das heißt, jedes Datagramm kann einem bestimmten Teilnehmer zugeordnet sein. Gemäß einer anderen Ausführungsform ist ein Datagramm mehreren Teilnehmern zugeordnet. Zusätzlich zu diesen und/oder weiteren Feldern des Telegramms umfasst das Telegramm ein Feld "Set Delay Time = d1", welches die Angabe der Wartezeit enthält. Die Wartezeit kann in jeder beliebigen geeigneten Einheit angegeben sein, zum Beispiel in einer physikalischen Zeiteinheit wie Nanosekunde oder Mikrosekunde oder in einer anderen Einheit, zum Beispiel einer Zahl von Taktzyklen. In einer einfachen Ausführungsform erfolgt die Angabe der Wartezeit in Form der Nummer des betreffenden Telegramms innerhalb der Telegrammwiederholungsfolge. Die N Telegramme der Telegrammwiederholungsfolge können zum Beispiel von 0 bis N-1 durchnummeriert werden. Die Telegrammnummer lässt sich insofern als Wartezeit interpretieren, als sie von dem empfangenden Teilnehmer (z.B. dem zweiten Teilnehmer 16) in eine Wartezeit übersetzt werden kann. In einer Ausführungsform sind die Sendezeitpunkte äquidistant mit zeitlichem Abstand d (d ist der Abstand zwischen zwei aufeinanderfolgenden Sendezeitpunkten) und der zweite Teilnehmer berechnet die Wartezeit aus der Telegrammnummer I gemäß $W\_I = (N-1-I) * d + \Delta W\_I$, wobei $\Delta W\_I$ die erwähnte Toleranzzeit ist. Die Angabe einer Wartezeit kann grundsätzlich an jeder beliebigen Position im Telegramm eingefügt sein. Es kann jedoch vorteilhaft sein, wenn sich die Angabe der Wartezeit an einer Position zwischen einem Header des Telegramms (in dem gezeigten Beispiel der Ethernet-Header) und einem Prüfwert (der in der Regel am Ende des Telegramms vorgesehen ist) angeordnet ist. Der Verarbeitungsaufwand im Empfänger lässt sich hierdurch reduzieren. In dem Beispiel erfolgt die Angabe der Wartezeit zwischen dem Ethernet-Header und dem einen oder den mehreren Datagrammen.

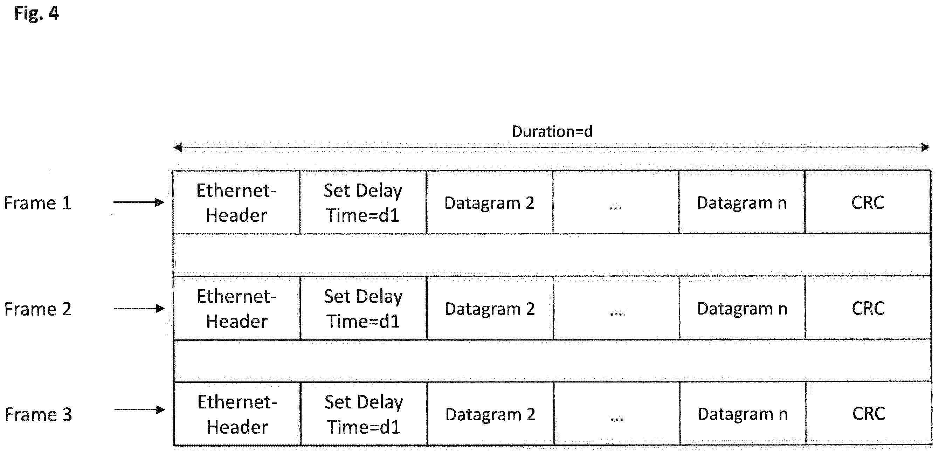

Fig. 4 zeigt schematisch ein Beispiel einer Telegrammwiederholungsfolge bestehend aus N=3 Telegrammen Frame1, Frame2 und Frame3. Die drei Telegramme sind in der Zeichnung vertikal versetzt dargestellt, werden aber nacheinander übertragen, zum Beispiel unmittelbar nacheinander. Jedes der drei Telegramme enthält ein Feld mit der Angabe einer dem betreffenden Telegramm zugeordneten Wartezeit $W\_I$ (I=0, 1, 2), wobei die Telegramme mit dem Telegrammindex I von 0 bis 2 durchnummeriert sind. Die Wartezeiten betragen in dem Beispiel $W\_I = (2-I) * d$. Die Sendezeitpunkte der drei gezeigten Telegramme sind $T\_I = T\_0 + I * d$. Das heißt, die Telegramme werden jeweils um die Telegrammdauer d versetzt nacheinander ausgesendet. Im gewöhnlichen Betrieb ist die Laufzeit vom sendenden Teilnehmer (z.B. der erste Teilnehmer 14) zum empfangenden Teilnehmer (z.B. der zweite Teilnehmer 16) für jedes Telegramm dieselbe. Die Telegramme werden somit entsprechend den Sendezeitpunkten $T\_I$ (I=0, 1, 2) versetzt empfangen. Die entsprechenden Empfangszeitpunkte sind somit $T'\_I = T'\_0 + I * d$. Unter allen erfolgreich empfangenen Telegrammen der Telegrammwiederholungsfolge wählt der empfangende Teilnehmer ein Telegramm (z.B. das früheste) aus und lässt die im ausgewählten Telegramm angegebene Wartezeit verstreichen, bis er eine dem ausgewählten Telegramm zugeordnete Aktion ausführt, zum Beispiel einen Interrupt erzeugt. Sei K der Index des ausgewählten Telegramms. Dann läuft die Wartezeit zum Zeitpunkt $T'\_K + W\_K$ ab, also zum Zeitpunkt $T'\_0 + K * d + (2-K) * d = T'\_0 + 2 * d = T'\_2$. Die Aktion wird folglich zum Zeitpunkt $T'\_2$ des Empfangs des dritten (und letzten) Telegramms der Telegrammwiederholungsfolge ausgeführt, unabhängig davon, welches Telegramm der Telegrammwiederholungsfolge ausgewählt wurde. Eine Synchronisierung der Aktion mit Ereignissen oder anderen Aktionen im Kommunikationsnetzwerk wird damit verbessert. Die Toleranzzeiten $\Delta W\_I$ sind in dem Beispiel null (das heißt, $\Delta W\_I = 0$ für I=0 bis N-1). Das Beispiel lässt sich ohne Schwierigkeiten auf eine Telegrammwiederholungsfolge mit mehr als drei Telegrammen übertragen.

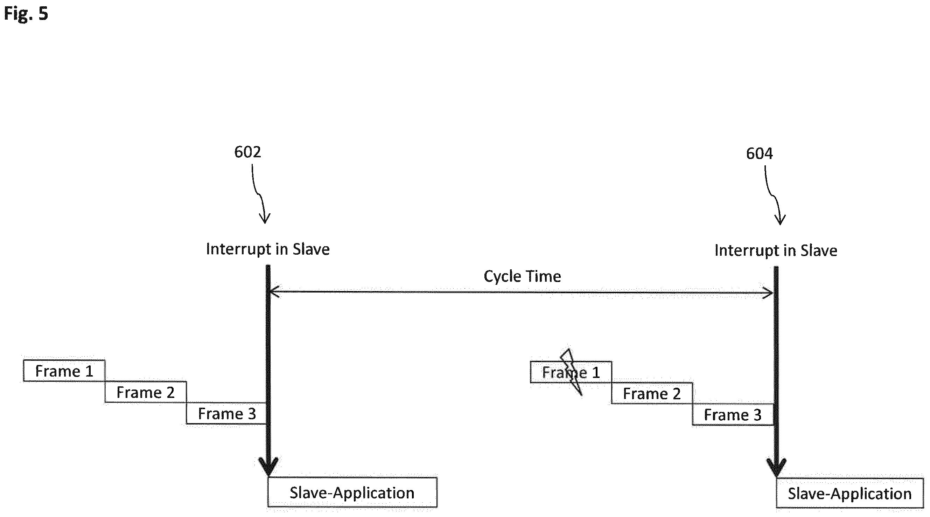

Werden zum Beispiel, wie in Fig. 5 schematisch dargestellt, Telegrammwiederholungsfolgen periodisch gesendet, so bewirken die Wartezeitangaben in den einzelnen Telegrammen, dass die Folge von Aktionen (z.B. Interrupts), die der Folge von Telegrammwiederholungsfolgen entspricht, dieselbe Periodendauer aufweist. Periodenschwankungen (Jitter) sind daher stark reduziert im Vergleich zu einem herkömmlichen Schema, in welchem das ausgewählte Telegramm eine sofortige Ausführung der betreffenden Aktion auslöst.

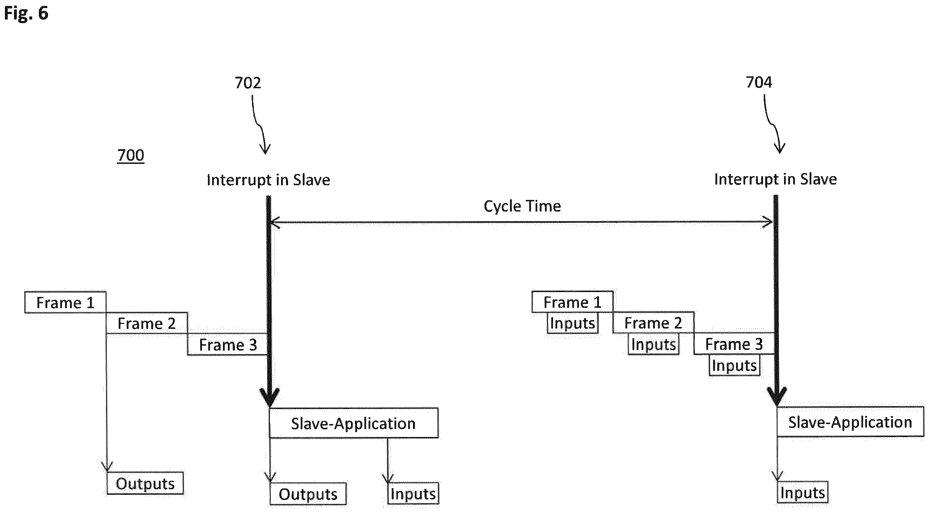

Fig. 6 zeigt schematisch ein Beispiel eines Verfahrens 600 zum Betreiben eines Teilnehmers in einem Kommunikationsnetzwerk. In dem Beispiel empfängt der Teilnehmer (z.B. der zweite Teilnehmer 16) innerhalb eines ersten Empfangszyklus eine erste Telegrammwiederholungsfolge 602 und innerhalb eines anschließenden zweiten Empfangszyklus eine zweite Telegrammwiederholungsfolge 604. Die beiden Telegrammwiederholungsfolgen 602, 604 umfassen jeweils zum Beispiel drei Telegramme und können zum Beispiel jeweils wie oben mit Bezug auf Fig. 4 beschrieben aufgebaut sein. In dem Beispiel wählt der Teilnehmer zunächst das erste Telegramm der ersten Telegrammwiederholungsfolge 602 aus und schreibt Nutz- und/oder Statusdaten des ersten Telegramms (Frame1) in einen Puffer. Das zweite und das dritte Telegramm (Frame2 und Frame3) werden von dem Teilnehmer hingegen lediglich weitergeleitet, ohne dass der Teilnehmer in ihnen enthaltene Daten zwischenspeichert. Dies gelingt zum Beispiel dadurch, dass Schreibzugriffe auf den Puffer, nachdem die Nutz- und/oder Statusdaten aus dem ersten Telegramm in den Puffer geschrieben wurden, bis zum Ablauf der Wartezeit des ersten Telegramms verboten werden (der Puffer ist im Zustand "buffer full"). Die Nutz- und/oder Statusdaten im Puffer werden der Teilnehmeranwendung "Slave-Applikation" jedoch nicht sofort zur Verfügung gestellt. Erst mit Ablauf der Wartezeit, also nach dem Empfangszeitpunkt des dritten Telegramms der Folge 602, wird die Aktion ausgelöst (z.B. ein Interrupt), und die Nutz- und/oder Statusdaten im Puffer der "Slave-Applikation" zur Verfügung gestellt, so dass diese die Daten lesen kann. Die aus dem Puffer ausgelesenen Daten (z.B. Ausgabedaten "Outputs" des Master-Teilnehmers 14) werden von dem Teilnehmer verwendet (z.B. als Ausgangsdaten), nach dem Auslesen geht der Puffer in den Zustand "buffer empty". Die Aktion veranlasst die "Slave-Applikation", Eingangsdaten "Inputs" aufzunehmen und in einen weiteren Puffer für Eingangsdaten zu schreiben ("buffer full"). Diese Eingangsdaten werden einem weiteren Teilnehmer (z.B. dem zweiten Teilnehmer 18), oder dem Master 14 des Kommunikationsnetzwerks zur Verfügung gestellt. In dem Beispiel erfolgt dies mittels der zweiten Telegrammwiederholungsfolge 604. In dem Beispiel kopiert der Teilnehmer die Daten "Inputs" aus dem Puffer in jedes Telegramm der zweiten Telegrammwiederholungsfolge 604. Mit der zweiten Telegrammwiederholungsfolge 604 werden die Daten "Inputs" redundant weitergeleitet. Erst mit Ablauf der Wartezeit, also nach dem Empfangszeitpunkt des dritten Telegramms der Folge 604, wird der Puffer für Eingangsdaten in den Zustand "buffer empty" zurückgesetzt (z.B. damit er danach nicht nochmal gelesen werden kann, da sein Inhalt nun als veraltet betrachtet wird).

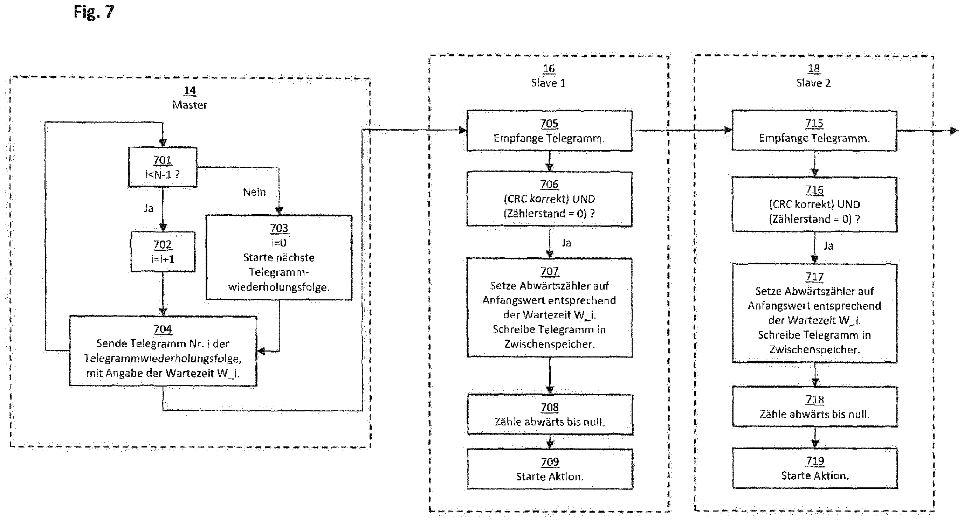

Fig. 7 veranschaulicht eine Ausführungsform eines Verfahrens zum Betreiben eines Kommunikationsnetzwerks. Das Kommunikationsnetzwerk kann zum Beispiel das Netzwerk 10 aus Fig. 1 sein. Das Netzwerk umfasst mehrere Teilnehmer, zum Beispiel die Teilnehmer 14, 16 und 18. Die Teilnehmer 14, 16 und 18 sind in dem Beispiel ein Master-Teilnehmer (Master) 14, ein Slave-Teilnehmer (Slave) 16 sowie ein weiterer Slave 18, zum Beispiel in einem EtherCAT-System.

Der erste Teilnehmer 14 wird so betrieben, dass er eine Telegrammwiederholungsfolge bestehend aus N Telegrammen erzeugt (Maßnahmen 701, 702, 703, 704). Nach Erzeugen der Telegrammwiederholungsfolge beginnt der erste Teilnehmer 14 mit dem Erzeugen einer nächsten Telegrammwiederholungsfolge (703). Die N Telegramme jeder Telegrammwiederholungsfolge werden nacheinander vom ersten Teilnehmer 14 an den zweiten Teilnehmer 16 gesendet (704). Jedes der Telegramme enthält die Angabe einer entsprechenden Wartezeit. Dem (I+1)-ten Telegramm der Telegrammwiederholungsfolge, also dem mit dem Index I bezeichneten Telegramm der Folge, wobei I=0, ..., N-1 beträgt, ist damit eine Wartezeit $W\_I$ zugeordnet.

Der zweite Teilnehmer 16 empfängt das vom ersten Teilnehmer 14 gesendete Telegramm (705) und prüft, ob der im Telegramm enthaltene Prüfwert korrekt ist, und ob der Abwärtszähler des zweiten Teilnehmers 16 auf null steht (706). Wenn diese beiden Bedingungen erfüllt sind, setzt der zweite Teilnehmer 16 den Abwärtszähler auf einen der Wartezeit $W\_I$ entsprechenden Anfangswert. Außerdem schreibt der zweite Teilnehmer 16 das empfangene Telegramm, oder wenigstens einen relevanten Teil davon, in einen Zwischenspeicher (707). Der getaktete Abwärtszähler zählt dann in Übereinstimmung mit einer Taktfrequenz des Kommunikationsnetzwerks abwärts bis null (708). Ab der Ermittlung (706), dass der Prüfwert korrekt ist und der Zählerstand null beträgt, und bis zum Erreichen des Nullwertes (708) vergeht damit die Wartezeit $W\_I$. Die dem empfangenen Telegramm zugeordnete Aktion wird durch das Erreichen des Nullwertes des Abwärtszählers (708) ausgelöst (709). Anstelle des Abwärtszählers kann auch ein Aufwärtszähler zum Einsatz kommen. Anstelle des Nullwertes kann ein anderer Endwert definiert werden.

Man erkennt, dass in dieser Ausführungsform die Auswahl eines Telegrammes aus der Telegrammwiederholungsfolge durch die Maßnahme 706 erfolgt, also mit der Prüfung des Prüfwertes des empfangenen Telegramms und mit der Prüfung, ob der Abwärtszähler auf null steht. Es versteht sich, dass in anderen Ausführungsformen die Auswahl aufgrund anderer Kriterien erfolgen kann.

In dem gezeigten Beispiel leitet der zweite Teilnehmer 16 jedes empfangene Telegramm (nicht nur das ausgewählte) an einen weiteren Teilnehmer des Kommunikationsnetzwerks weiter, hier an den dritten Teilnehmer 18, und zwar ohne Verzögerung, das heißt, ohne den Ablauf der im empfangenen Telegramm angegebenen Wartezeit abzuwarten. Der dritte Teilnehmer 18 empfängt das Telegramm (715) und leitet es ebenfalls weiter, zum Beispiel an einen weiteren Teilnehmer (in Fig. 7 nicht dargestellt) oder zurück an den ersten Teilnehmer 14 oder den zweiten Teilnehmer 16. Die mit Bezugnahme auf den zweiten Teilnehmer 16 erläuterten Maßnahmen 705 bis 709 sind in dem Beispiel in dem dritten Teilnehmer 18 auf identische oder ähnliche Weise implementiert (715 bis 719). Ähnlich wie der erste Teilnehmer 16 wählt somit auch der zweite Teilnehmer 18 unter den von ihm empfangenen Telegrammen (715) ein erfolgreich empfangenes Telegramm aus (716) und startet eine Aktion (719) nach Ablauf der im ausgewählten Telegramm angegebenen Wartezeit (717, 718).

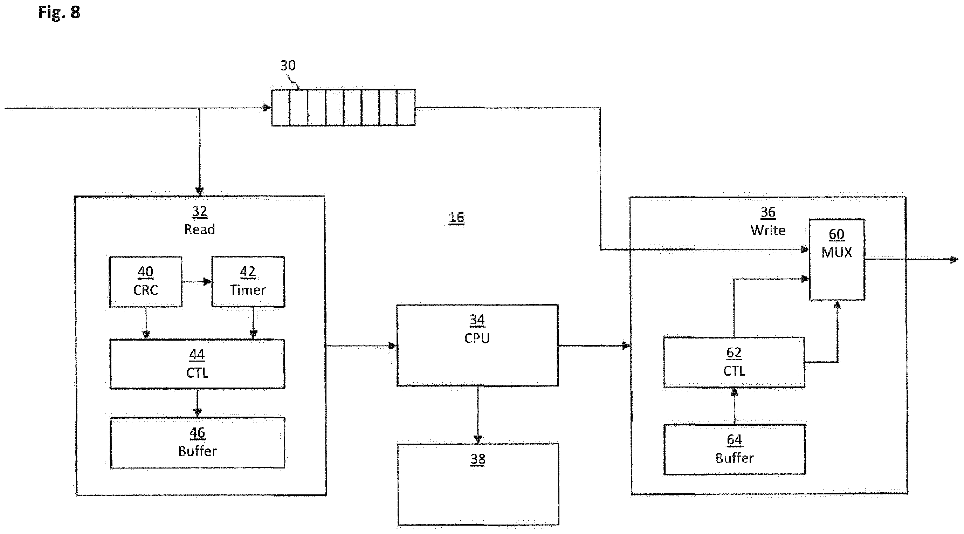

Der in Fig. 8 als Beispiel einer Ausführungsform schematisch dargestellte Teilnehmer 12 umfasst eine Durchlaufeinheit 30, eine Empfängerschaltung 32, eine Verarbeitungsschaltung 34, eine Sendeschaltung 36 und eine funktionale Einheit (Funktionseinheit) 38. Im Betrieb gelangt ein Telegramm zunächst an einen Eingang der Durchlaufeinheit 30 und an einen Eingang der Empfängerschaltung 32. Das Telegramm durchläuft die Durchlaufeinheit 30 und erreicht mit einer von der Durchlaufeinheit 30 vorgegebenen Verzögerung einen Eingang der Sendeschaltung 36. Jedes einzelne Datum (zum Beispiel ein Byte) des Telegramms wird von der Sendeschaltung 36 entweder unverändert an einem Ausgang der Sendeschaltung 36 ausgegeben oder durch ein in der Sendeschaltung 36 bereitgestelltes Datum (zum Beispiel ein Byte) ersetzt. Der Teilnehmer 12 kann somit Daten zur Weiterleitung an einen oder mehrere andere Teilnehmer (in Fig. 8 nicht dargestellt) in das empfangene Telegramm schreiben, während das Telegramm den Teilnehmer 12 durchläuft.

Die Empfängerschaltung 32 wählt unter den Telegrammen einer empfangenen Telegrammwiederholungsfolge ein Telegramm aus und übermittelt das ausgewählte Telegramm oder wenigstens einen Teil davon an die Steuereinrichtung 34. In dem gezeigten Beispiel übermittelt die Empfängerschaltung 32 das ausgewählte Telegramm erst nach Ablauf der im ausgewählten Telegramm angegebenen Wartezeit an die Steuereinrichtung 34. In einer anderen Ausführungsform übermittelt die Empfängerschaltung 32 das ausgewählte Telegramm an die Steuereinrichtung 34 ohne Verzögerung (das heißt ohne zunächst die Wartezeit verstreichen zu lassen) und signalisiert der Steuereinrichtung 34 den Ablauf der Wartezeit über ein separates Steuersignal. In beiden Ausführungsformen leitet im Ergebnis die Steuereinrichtung 34 mit Ablauf der im ausgewählten Telegramm angegebenen Wartezeit eine dem ausgewählten Telegramm zugeordnete Aktion ein. Die Aktion kann zum Beispiel das Senden eines Steuersignals an die funktionale Einheit 38 umfassen. Die funktionale Einheit 38 kann zum Beispiel Teil eines Roboters oder eines Sensors in einer Fertigungsanlage sein.

Die Empfängerschaltung 32 kann zum Beispiel eine Prüfeinrichtung 40, einen Abwärtszähler 42, eine Empfängersteuerschaltung 44 und einen Zwischenspeicher 46 umfassen. Im Betrieb ermittelt die Prüfeinrichtung 40, ob das Telegramm erfolgreich empfangen wurde, zum Beispiel anhand eines Prüfwerts im empfangenen Telegramm, zum Beispiel auf der Grundlage einer zyklischen Redundanzprüfung. Wenn die Prüfeinrichtung 40 einen erfolgreichen Empfang feststellt und der Abwärtszähler 42 auf null steht, so setzt die Prüfeinrichtung 40 den Abwärtszähler 42 in Gang und liefert der Steuereinrichtung 44 ein Signal, welches bewirkt, dass das empfangene Telegramm (welches nun das ausgewählte Telegramm darstellt) in den Zwischenspeicher 46 geschrieben wird. Mit Ablauf der Wartezeit, das heißt, wenn der Abwärtszähler 42 wieder bei null angelangt ist, wertet die Steuereinrichtung 34 das zwischengespeicherte ausgewählte Telegramm aus und leitet in Abhängigkeit vom Inhalt des ausgewählten Telegramms eine entsprechende Aktion ein.

Bei der Sendeschaltung 36 kann es sich um eine dem Fachmann bekannte Schaltung handeln. In dem gezeigten Beispiel umfasst sie einen Multiplexer 60, eine Steuerschaltung 62 und einen Zwischenspeicher 64. In dem Zwischenspeicher 64 können Daten, die in ein durchlaufendes Telegramm geschrieben werden sollen, bereitgehalten werden. Die Steuerschaltung 62 liest die gewünschten Daten aus dem Zwischenspeicher 64 und fügt sie durch geeignete Ansteuerung des Multiplexers 60 an die geeignete Stelle im durchlaufenden Telegramm ein.

Es versteht sich, dass die in Fig. 8 schematisch dargestellte Ausführungsform nur ein Beispiel ist und die in der Anmeldung beschriebenen Maßnahmen in anders aufgebauten Teilnehmern umgesetzt werden können.

**Patentansprüche**

1. Verfahren zum Betreiben eines Kommunikationsnetzwerks, wobei das Kommunikationsnetzwerk mehrere Teilnehmer einschließlich eines ersten und eines zweiten Teilnehmers umfasst,
   wobei der erste Teilnehmer eine Telegrammwiederholungsfolge bestehend aus N aufeinanderfolgenden Telegrammen an den zweiten Teilnehmer sendet, wobei N ≥ 2, wobei jedem Telegramm der Telegrammwiederholungsfolge eine jeweilige vom zweiten Teilnehmer ausführbare Aktion zugeordnet ist,
   wobei der erste Teilnehmer zu N aufeinanderfolgenden Sendezeitpunkten T_I (I=0, ..., N-1) jeweils mit dem Senden eines der N Telegramme beginnt, wobei jedes der N Telegramme ein Feld enthält, das eine dem jeweiligen Telegramm zugeordnete Wartezeit

$$W\_I = T\_(N-1) - T\_I + \Delta W\_I \qquad (I=0, ..., N-1)$$

definiert, wobei $\Delta$W_I eine nichtnegative Toleranzzeit ist, und wobei der zweite Teilnehmer unter den erfolgreich von ihm empfangenen Telegrammen der Telegrammwiederholungsfolge ein Telegramm als ein Nutztelegramm auswählt und eine ab dem Empfang des Nutztelegramms verstrichene Zeit misst und dann, wenn die verstrichene Zeit die dem Nutztelegramm zugeordnete Wartezeit erreicht hat, die dem Nutztelegramm zugeordnete Aktion ausführt.

2. Verfahren nach Anspruch 1, wobei der zweite Teilnehmer unter den erfolgreich empfangenen Telegrammen der Telegrammwiederholungsfolge das am frühesten von ihm empfangene Telegramm als das Nutztelegramm auswählt.

3. Verfahren nach einem der vorangehenden Ansprüche, wobei die den Telegrammen der Telegrammwiederholungsfolge jeweils zugeordnete Aktion jeweils das Erzeugen eines Interrupts umfasst.

4. Verfahren nach einem der vorangehenden Ansprüche, wobei jedem Telegramm der Telegrammwiederholungsfolge dieselbe Aktion zugeordnet ist.

5. Verfahren nach einem der vorangehenden Ansprüche, wobei der zweite Teilnehmer bei erfolgreichem Empfang eines weiteren Telegramms der Telegrammwiederholungsfolge die dem weiteren Telegramm zugordnete Aktion nicht ausführt.

6. Verfahren nach einem der vorangehenden Ansprüche, wobei der zweite Teilnehmer jedes von ihm empfangene Telegramm der Telegrammwiederholungsfolge an einen weiteren Teilnehmer des Kommunikationsnetzwerks weiterleitet oder an den ersten Teilnehmer zurückleitet, ohne den Ablauf der im Telegramm angegebenen Wartezeit abzuwarten.

7. Verfahren nach einem der vorangehenden Ansprüche, wobei der zweite Teilnehmer Nutzdaten in ein Nutzdatenfeld des empfangenen Telegramms einschreibt und das so bearbeitete Telegramm an einen weiteren Teilnehmer des Kommunikationsnetzwerks weiterleitet oder an den ersten Teilnehmer zurückleitet, ohne den Ablauf der im Telegramm angegebenen Wartezeit abzuwarten.

8. Verfahren nach einem der vorangehenden Ansprüche, wobei die Telegramme der Telegrammwiederholungsfolge jeweils dieselben Nutzdaten und/oder dieselben Statusdaten enthalten.

9. Verfahren nach einem der vorangehenden Ansprüche, wobei die Telegramme der Telegrammwiederholungsfolge von den Teilnehmern im Durchlauf verarbeitet werden.

10. Verfahren nach einem der vorangehenden Ansprüche, wobei der erste Teilnehmer zu einem Zeitpunkt T_N, der später als T_(N-1) liegt, ein weiteres Telegramm aussendet, welches nicht der genannten Telegrammwiederholungsfolge angehört, und wobei die Toleranzzeiten $\Delta$W_I jeweils kürzer als $T_N - T_{(N-1)}$ sind (I=0, ..., N-1).

11. Kommunikationsnetzwerk mit einem ersten und einem zweiten Teilnehmer,
wobei der erste Teilnehmer dazu eingerichtet ist, eine Telegrammwiederholungsfolge bestehend aus N Telegrammen auszusenden, wobei $N \geq 2$, und wobei jedem Telegramm der Telegrammwiederholungsfolge eine jeweilige vom zweiten Teilnehmer ausführbare Aktion zugeordnet ist, wobei der erste Teilnehmer zu N aufeinanderfolgenden Sendezeitpunkten T_I (I=0, ..., N-1) jeweils mit dem Aussenden eines der N Telegramme beginnt, wobei jedes der N Telegramme ein Feld enthält, das eine dem jeweiligen Telegramm zugeordnete Wartezeit

$$W\_I = T\_(N-1) - T\_I + \Delta W\_I \qquad (I=0, ..., N-1)$$

definiert, wobei $\Delta$W_I eine nichtnegative Toleranzzeit ist, und wobei der zweite Teilnehmer dazu eingerichtet ist, unter den erfolgreich von ihm empfangenen Telegrammen der Telegrammwiederholungsfolge ein Telegramm als ein Nutztelegramm auszuwählen und eine ab dem Empfang des Nutztelegramms verstrichene Zeit zu messen und dann, wenn die verstrichene Zeit die dem Nutztelegramm zugeordnete Wartezeit erreicht hat, die dem Nutztelegramm zugeordnete Aktion auszuführen.

12. Teilnehmer in einem Kommunikationsnetzwerk, wobei der Teilnehmer dazu eingerichtet ist, eine Telegrammwiederholungsfolge bestehend aus N Telegrammen zu empfangen und ein erfolgreich von ihm empfangenes Telegramm der Telegrammwiederholungsfolge als ein Nutztelegramm auszuwählen und eine ab dem Empfang des Nutztelegramms verstrichene Zeit zu messen und dann, wenn die verstrichene Zeit die dem Nutztelegramm zugeordnete Wartezeit erreicht hat, eine dem Nutztelegramm zugeordnete Aktion auszuführen.

13. Teilnehmer nach Anspruch 12, wobei der Teilnehmer einen Speicher aufweist und dazu eingerichtet ist, eine Kopie des ausgewählten Telegramms wenigstens bis zum Ablauf der Wartezeit in dem Speicher zu speichern.

14. Teilnehmer nach Anspruch 12 oder 13, wobei der Teilnehmer einen getakteten Zähler aufweist, dem ein Endwert zugeordnet ist, und wobei der Teilnehmer dazu eingerichtet ist, als Reaktion auf den erfolgreichen Empfang eines Telegramms, sofern der Zähler dann auf seinem Endwert steht:

das Telegramm als das Nutztelegramm auszuwählen;
einen Startwert entsprechend der durch das Nutztelegramm definierten Wartezeit zu bestimmen, den Zähler auf den Startwert zu setzen, zu starten und bei Erreichen des Endwertes anzuhalten;
und die dem Telegramm zugeordnete Aktion erst dann auszuführen, wenn der Abwärtszähler den Endwert erreicht hat.

15. Teilnehmer nach Anspruch 14, wobei die Toleranzzeiten $\Delta W\_I$ (I= 0, ..., N-1) jeweils größer als null sind.

## Claims

1. Method for operating a communications network, wherein the communications network comprises a plurality of participants including a first participant and a second participant,
wherein the first participant transmits a message repeating sequence consisting of N successive messages to the second participant, where $N \geq 2$, wherein a respective action which can be performed by the second participant is assigned to each message in the message repeating sequence,
wherein the first participant respectively begins to transmit one of the N messages at N successive transmission times T_I (I=0, ..., N-1), wherein each of the N messages contains a field which defines a waiting time assigned to the respective message

$$W\_I = T\_(N-1) - T\_I + \Delta W\_I (I=0, ..., N-1),$$

where $\Delta W\_I$ is a non-negative tolerance time, and wherein the second participant selects one message from among the messages in the message repeating sequence which are successfully received by the second participant as a useful message and measures a time elapsed since the reception of the useful message and performs the action assigned to the useful message when the elapsed time has reached the waiting time assigned to the useful message.

2. Method according to Claim 1, wherein the second participant selects the message received earliest by the second participant from among the successfully received messages in the message repeating sequence as the useful message.

3. Method according to any one of the preceding claims, wherein the action respectively assigned to the messages in the message repeating sequence respectively comprises generating an interrupt.

4. Method according to any one of the preceding claims, wherein the same action is assigned to each message in the message repeating sequence.

5. Method according to any one of the preceding claims, wherein, upon successful reception of a further message in the message repeating sequence, the second participant does not perform the action assigned to the further message.

**6.** Method according to any one of the preceding claims, wherein the second participant forwards each message in the message repeating sequence which is received by the second participant to a further participant of the communications network or returns said message to the first participant without waiting for the expiry of the waiting time stated in the message.

**7.** Method according to any one of the preceding claims, wherein the second participant writes useful data into a useful data field of the received message and forwards the message processed in this manner to a further participant of the communications network or returns said message to the first participant without waiting for the expiry of the waiting time stated in the message.

**8.** Method according to any one of the preceding claims, wherein the messages in the message repeating sequence each contain the same useful data and/or the same status data.

**9.** Method according to any one of the preceding claims, wherein the messages in the message repeating sequence are processed by the participants in passing.

**10.** Method according to any one of the preceding claims, wherein, at a time T_N which is later than T_(N-1), the first participant transmits a further message which does not belong to said message repeating sequence, and wherein the tolerance times $\Delta$W_I are each shorter than T_N - T_ (N-1) (I=0, ..., N-1) .

**11.** Communications network having a first participant and a second participant,
wherein the first participant is set up to transmit a message repeating sequence consisting of N messages, where N $\geq$ 2, wherein a respective action which can be performed by the second participant is assigned to each message in the message repeating sequence, wherein the first participant respectively begins to transmit one of the N messages at N successive transmission times T_I (I=0, ..., N-1), wherein each of the N messages contains a field which defines a waiting time assigned to the respective message

$$W\_I \ = \ T\_(N-1) \ - \ T\_I \ + \ \Delta W\_I(I=0, \ \ldots, \ N-1),$$

where $\Delta$W_I is a non-negative tolerance time, and wherein the second participant is set up to select one message from among the messages in the message repeating sequence which are successfully received by the second participant as a useful message and to measure a time elapsed since the reception of the useful message and to perform the action assigned to the useful message when the elapsed time has reached the waiting time assigned to the useful message.

**12.** Participant in a communications network, wherein the participant is set up to receive a message repeating sequence consisting of N messages and to select a message in the message repeating sequence which is successfully received by said participant as a useful message and to measure a time elapsed since the reception of the useful message and to perform an action assigned to the useful message when the elapsed time reaches the waiting time assigned to the useful message.

**13.** Participant according to Claim 12, wherein the participant has a memory and is set up to store a copy of the selected message in the memory at least until the waiting time expires.

**14.** Participant according to Claim 12 or 13, wherein the participant has a clocked counter, to which a final value is assigned, and wherein the participant is set up, in response to the successful reception of a message, provided that the counter is then at its final value:

to select the message as the useful message;
to determine a starting value corresponding to the waiting time defined by the useful message, to set the counter to the starting value, to start the counter and to stop the counter when the final value is reached;
and to perform the action assigned to the message only when the down-counter has reached the final value.

**15.** Participant according to Claim 14, wherein the tolerance times $\Delta$W_I (I=0, ..., N-1) are each greater than zero.

**Revendications**

1. Procédé pour faire fonctionner un réseau de communication, le réseau de communication comprenant plusieurs abonnés incluant un premier et un deuxième abonné,

le premier abonné envoyant au deuxième abonné une séquence de répétition de télégrammes composée de N télégrammes successifs, avec N ≥ 2, une action respective qui peut être accomplie par le deuxième abonné étant associée à chaque télégramme de la séquence de répétition de télégrammes,

le premier abonné commençant respectivement l'envoi de l'un des N télégrammes à N instants d'envoi T_I (I = 0, ..., N-1) successifs, chacun des N télégrammes contenant un champ qui définit un temps d'attente

$$W\_I = T\_(N-1) - T\_I + \Delta W\_I \quad (I = 0, \ldots, N-1)$$

associé au télégramme respectif, ΔW_I étant un temps de tolérance non négatif,

et le deuxième abonné, parmi les télégrammes de la séquence de répétition de télégrammes qu'il a reçus avec succès, sélectionnant un télégramme en tant que télégramme utile et mesurant un temps écoulé à partir de la réception du télégramme utile et ensuite, lorsque le temps écoulé a atteint le temps d'attente associé au télégramme utile, accomplissant l'action associée au télégramme utile.

2. Procédé selon la revendication 1, le deuxième abonné, parmi les télégrammes de la séquence de répétition de télégrammes qu'il a reçus avec succès, sélectionnant en tant que télégramme utile le télégramme qu'il a reçu le plus tôt.

3. Procédé selon l'une des revendications précédentes, l'action associée aux télégrammes de la séquence de répétition de télégrammes comprenant respectivement la génération d'une interruption.

4. Procédé selon l'une des revendications précédentes, la même action étant associée à chaque télégramme de la séquence de répétition de télégrammes.

5. Procédé selon l'une des revendications précédentes, le deuxième abonné, en cas de réception réussie d'un télégramme supplémentaire de la séquence de répétition de télégrammes, n'accomplissant pas l'action associée au télégramme supplémentaire.

6. Procédé selon l'une des revendications précédentes, le deuxième abonné retransmettant chaque télégramme qu'il reçoit de la séquence de répétition de télégrammes à un abonné supplémentaire du réseau de communication ou le renvoyant au premier abonné sans attendre l'écoulement du temps d'attente indiqué dans le télégramme.

7. Procédé selon l'une des revendications précédentes, le deuxième abonné écrivant des données utiles dans un champ de données utiles du télégramme reçu et retransmettant le télégramme ainsi traité à un abonné supplémentaire du réseau de communication ou le renvoyant au premier abonné sans attendre l'écoulement du temps d'attente indiqué dans le télégramme.

8. Procédé selon l'une des revendications précédentes, les télégrammes de la séquence de répétition de télégrammes contenant respectivement les mêmes données utiles et/ou les mêmes données d'état.

9. Procédé selon l'une des revendications précédentes, les télégrammes de la séquence de répétition de télégrammes étant traités en continu par les abonnés.

10. Procédé selon l'une des revendications précédentes, le premier abonné, à un instant T_N qui est postérieur à T_(N-1), émettant un télégramme supplémentaire qui ne fait pas partie de ladite séquence de répétition de télégrammes, et les temps de tolérance ΔW_I étant respectivement plus courts que T_N - T_(N-1) (I = 0, ..., N-1) .

11. Réseau de communication comprenant un premier et un deuxième abonné,

le premier abonné étant conçu pour émettre une séquence de répétition de télégrammes composée de N télégrammes, avec N ≥ 2, une action respective qui peut être accomplie par le deuxième abonné étant associée à chaque télégramme de la séquence de répétition de télégrammes, le premier abonné commençant respectivement l'émission de l'un des N télégrammes à N instants d'envoi T_I (I = 0, ..., N-1) successifs, chacun des N télégrammes contenant un champ qui définit un temps d'attente

$$W\_I \;=\; T\_(N-1) \;-\; T\_I \;+\; \Delta W\_I \quad (I \;=\; 0, \;\ldots, \;N-1)$$

associé au télégramme respectif, $\Delta W\_I$ étant un temps de tolérance non négatif, et le deuxième abonné étant conçu pour sélectionner, parmi les télégrammes de la séquence de répétition de télégrammes qu'il a reçus avec succès, un télégramme en tant que télégramme utile et pour mesurer un temps écoulé à partir de la réception du télégramme utile et ensuite, lorsque le temps écoulé a atteint le temps d'attente associé au télégramme utile, accomplir l'action associée au télégramme utile.

12. Abonné dans un réseau de communication, l'abonné étant conçu pour recevoir une séquence de répétition de télégrammes composée de N télégrammes et sélectionner en tant que télégramme utile un télégramme de la séquence de répétition de télégrammes qu'il a reçu avec succès et pour mesurer un temps écoulé à partir de la réception du télégramme utile et ensuite, lorsque le temps écoulé a atteint le temps d'attente associé au télégramme utile, accomplir une action associée au télégramme utile.

13. Abonné selon la revendication 12, l'abonné possédant une mémoire et étant conçu pour enregistrer dans la mémoire une copie du télégramme sélectionné au moins jusqu'à l'écoulement du temps d'attente.

14. Abonné selon la revendication 12 ou 13, l'abonné possédant un compteur cadencé auquel est associée une valeur finale, et l'abonné étant conçu pour, en réaction à la réception réussie d'un télégramme, sous réserve que le compteur se trouve alors à sa valeur finale :

    sélectionner le télégramme en tant que télégramme utile ;
    déterminer une valeur de départ correspondant au temps d'attente défini par le télégramme utile, placer le compteur à la valeur de départ, le démarrer et l'arrêter lorsque la valeur finale est atteinte ;
    et n'accomplir ensuite l'action associée au télégramme que lorsque le compteur d'attente a atteint la valeur finale.

15. Abonné selon la revendication 14, les temps de tolérance $\Delta W\_I$ ($I = 0, \ldots, N-1$) étant respectivement supérieurs à zéro.

**Fig. 1**

EP 3 353 960 B1

**Fig. 2**

202 Interrupt in Slave — Frame 1, Frame 2, Frame 3 — Slave-Application

204 Interrupt in Slave — Delay, Frame 1, Frame 2, Frame 3 — Slave-Application

Cycle Time

16

Fig. 3

EP 3 353 960 B1

| Ethernet-Header | Set Delay Time=d1 | Datagram 2 | ... | Datagram n | CRC |
|---|---|---|---|---|---|

EP 3 353 960 B1

**Fig. 4**

Duration=d

| | Ethernet-Header | Set Delay Time=d1 | Datagram 2 | ... | Datagram n | CRC |
|---|---|---|---|---|---|---|
| Frame 1 → | Ethernet-Header | Set Delay Time=d1 | Datagram 2 | ... | Datagram n | CRC |
| Frame 2 → | Ethernet-Header | Set Delay Time=d1 | Datagram 2 | ... | Datagram n | CRC |
| Frame 3 → | Ethernet-Header | Set Delay Time=d1 | Datagram 2 | ... | Datagram n | CRC |

Fig. 5

602

604

Interrupt in Slave

Interrupt in Slave

Cycle Time

Frame 1

Frame 2

Frame 3

Slave-Application

Frame 1

Frame 2

Frame 3

Slave-Application

**Fig. 6**

700

702 Interrupt in Slave

704 Interrupt in Slave

Cycle Time

Frame 1
Frame 2
Frame 3

Frame 1
Inputs
Frame 2
Inputs
Frame 3
Inputs

Slave-Application

Slave-Application

Outputs

Outputs

Inputs

Inputs

EP 3 353 960 B1

**Fig. 7**

_18_
Slave 2

_715_ Empfange Telegramm.

_716_ (CRC korrekt) UND (Zählerstand = 0) ?

Ja

_717_ Setze Abwärtszähler auf Anfangswert entsprechend der Wartezeit W_i. Schreibe Telegramm in Zwischenspeicher.

_718_ Zähle abwärts bis null.

_719_ Starte Aktion.

_16_
Slave 1

_705_ Empfange Telegramm.

_706_ (CRC korrekt) UND (Zählerstand = 0) ?

Ja

_707_ Setze Abwärtszähler auf Anfangswert entsprechend der Wartezeit W_i. Schreibe Telegramm in Zwischenspeicher.

_708_ Zähle abwärts bis null.

_709_ Starte Aktion.

_14_
Master

_701_ i<N-1 ?

Nein

_703_ i=0 Starte nächste Telegramm-wiederholungsfolge.

Ja

_702_ i=i+1

_704_ Sende Telegramm Nr. i der Telegrammwiederholungsfolge, mit Angabe der Wartezeit W_i.

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015117937
- EP 2527935 B1
- EP 2672359 A2